# EUROPEAN PATENT SPECIFICATION

(11) **EP 3 904 202 B1**
(45) Date of publication and mention of the grant of the patent: **07.06.2023**
(21) Application number: 20382351.3
(22) Date of filing: 29.04.2020
(51) Int. Cl.: B64C 1/06, B64C 1/00, B64C 9/38, B64C 21/06, B64D 27/14

(54) **A REAR END SECTION FOR AN AIRCRAFT**
HINTERER ENDABSCHNITT FÜR EIN FLUGZEUG
SECTION D'EXTRÉMITÉ ARRIÈRE D'UN AÉRONEF

(43) Date of publication of application: 03.11.2021
(73) Proprietor: Airbus Operations, S.L., 28906 Getafe (ES)
(72) Inventor: LLAMAS SANDIN, Raul Carlos, 28906 Getafe (ES)

(56) References cited:
- US-A- 2 780 424
- US-A1- 2012 138 736
- US-A1- 2013 062 455
- US-A1- 2016 332 741

## Description

### Object of the invention

The present invention refers to a rear end for an aircraft including a boundary layer ingestion (BLI) engine adapted to operate as a thruster with the aid of a movable control surface, mounted after the exhaust of the BLI engine to modulate the flow and divert it in order to provide vector thrust.

The main object of the present invention is to provide a rear end for an aircraft that is able of increasing the propulsive efficiency of conventional aircrafts, by ingesting the slow air in the fuselage boundary layer into some fluid mechanic thrusting devices, to increase the aircraft velocity, and reduce its usual energy consumption.

Another object of the invention is to reduce the size of the rear end of an aircraft.

### Background of the invention

The NASA STARC-ABL aircraft concept has a Boundary Layer Ingestion propulsion, where a conventional small engine (electric or thermal) drives a fan or rotor located at the end of a conical aft fuselage. This aircraft concept exhibits a T-tail. The European version of this project, known as CENTRELINE, is almost identical to the STARC-ABL concept.

The NASA/MIT D8 aircraft exhibits a Boundary Layer Ingestion propulsive system on a flattened rear fuselage. In this case, the empennage is of a "Pi" tail configuration, and the engines installed at the rear end are primary propulsive engines installed to only ingest the boundary layer on the upper surface of the fuselage.

US2016332741 A1 describes an aircraft including trailing edge flaps, a wing mounted propulsor positioned such that the flaps are located in a slipstream of the first propulsor in use when deployed. The aircraft further including a thrust vectorable propulsor configured to selectively vary the exhaust efflux vector of the propulsor in at least one plane. The thrust vectorable propulsor includes a ducted fan configurable between a first mode, in which the fan provides net forward thrust to the aircraft, and a second mode in which the fan provides net drag to the aircraft. The fan is positioned to ingest a boundary layer airflow in use when operating in the first mode.

US2780424A describes an airplane embodying a 1.5 turbojet power plant driving ducted compressors swivelingly mounted at each wing tip, the ducted compressors incorporating fuel. burners to temporarily augment the total power suffciently to provide direct or vertical takeoff and hovering, when the ducted compressors are turned to produce upward lifting thrust exceeding the gross weight of the airplane.

US2012138736A1 describes an airplane, including a fuselage having an elongate shape along a longitudinal axis of the airplane, and at least one wing attached to the fuselage between front and back ends of the fuselage and a substantially cylindrical central portion and a rear scaleable portion on which a vertical tail assembly and a rear propulsion assembly are attached. Between a section for connecting the rear portion to the central portion of the fuselage and the back end: the maximum width of each fuselage section is constant or increases towards the rear up to a maximum fuselage width L; the height of each fuselage section decreases towards the rear, such that the back end of the fuselage forms a thin trailing edge substantially horizontal in the indicating line of the airplane and substantially rectilinear; a reactor for the propulsion assembly is provided in a so-called semi-buried configuration in the fuselage.

US2013062455A1 describes a fixed-wing VTOL aircraft features an array of electric lift fans distributed over the surface of the aircraft. A generator is (selectively) coupled to the gas turbine engine of the aircraft. During VTOL operation of the aircraft, the engine drives the generator to generate electricity to power the lifting fans. Power to the lifting fans is reduced as the aircraft gains forward speed and is increasingly supported by the wings.

Regarding thrust vectoring, there are several concepts and applications known in the prior art but none of them is related to an engine that also operates as a BLI engine.

It would therefore be desirable to provide a technical solution that provides both an increase of the propulsive efficiency and thrust vectoring through the use of a BLI engine.

### Summary of the invention

The present invention overcomes the above mentioned drawbacks by providing a rear end section for an aircraft adapted to perform boundary layer ingestion at the time that provides vectoring thrust to the aircraft.

The rear end section for an aircraft has a fuselage, a v-tail formed by two surfaces set in a v-shaped configuration, and a thruster assembly mounted on the rear end fuselage between the v-tail and the rearmost section of said rear end fuselage. The thruster assembly comprises at least one propulsion device installed to ingest the air from the boundary layer formed over the fuselage of the aircraft, a control surface attached at the rearmost section of the rear end, and a casing covering at least part of the propulsion device such that an air inlet and an air outlet are defined between the casing and the propulsion device. The air inlet is designed for the passage of the fuselage boundary layer towards the propulsion device, and the air outlet is designed for directing the airflow exhausted from the propulsion device towards the control surface, to divert said airflow in order to provide vectoring thrust for the aircraft.

The invention provides an aircraft rear end with a propulsion device (engine) operating both as a BLI engine, by ingesting and consuming air forming a boundary layer over the fuselage of the aircraft, and also as a vectoring thruster with the aid of a control surface mounted to receive the engine slipstream, blowing over said control surface.

The invention increases the propulsive efficiency of the aircraft, and thus decreases its fuel consumption. The increment in linear momentum of the air of the boundary layer effected by the BLI engine generates thrust but the air in the slipstream has a lower velocity than it would be required in order to impart this momentum jump to free-stream air, thus leaving less kinetic energy in the slipstream and helping to reduce the energy consumption to generate a given amount of thrust.

Preferably, the at least one propulsion device will consist of an array of engines in order to improve the boundary layer capture efficiency, and to reduce the size and cost of each of the engines.

Additionally, using the BLI concept and adapting it to produce thrust vectoring, allows reducing the size of the empennage, with a consequent reduction of weight, drag and cost of the aircraft.

### Brief description of the drawings

For a better comprehension of the invention, the following drawings are provided for illustrative and non-limiting purposes, wherein:
Figure 1 shows a perspective view of the aircraft rear end section of the aircraft.
Figure 2 shows an upper perspective view of the rear end section of the aircraft.
Figure 3 shows a schematic longitudinal section view of the rear end section of the aircraft.
Figure 4 shows a rear view of the rear end section of the aircraft.

### Preferred embodiments of the invention

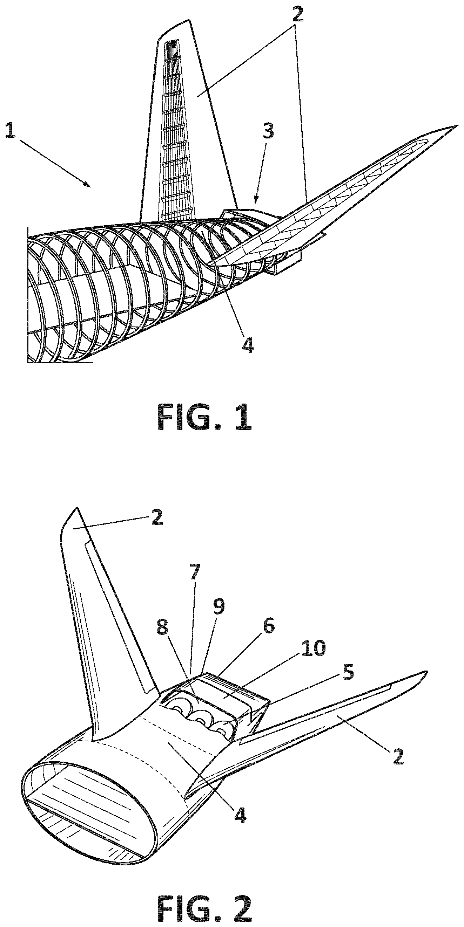

Figure 1 shows a preferred embodiment of the proposed concept. A conventional fuselage is shaped so that its rear end fuselage (4) section has a flattened shape. A thruster assembly (3) is installed towards the end of the fuselage (4), between the fins of a v-tail (2) arrangement and the rearmost section of said rear end fuselage (4).

As seen in Figure 2, the thruster assembly (3) comprises at least one propulsion device (5), a control surface (6), and a casing (7) defining an air inlet (8) and an air outlet (9) between the casing (7) and the propulsion device (5).

The propulsion device (5) is installed to ingest and consume air forming the fuselage boundary layer. The control surface (6) is mounted at the rearmost section of the rear end to receive the exhaust (outflow) of the propulsion device (5), and thus provide vectoring thrust to the aircraft when the said control surface (6) is deflected. The casing (7) is designed to cover at least part of the propulsion device (5) to allow both the passage of the fuselage boundary layer towards the propulsion device (5) through the air inlet (8), and the passage of the airflow exhausted from the propulsion device (5) towards the control surface (6) through the air outlet (9).

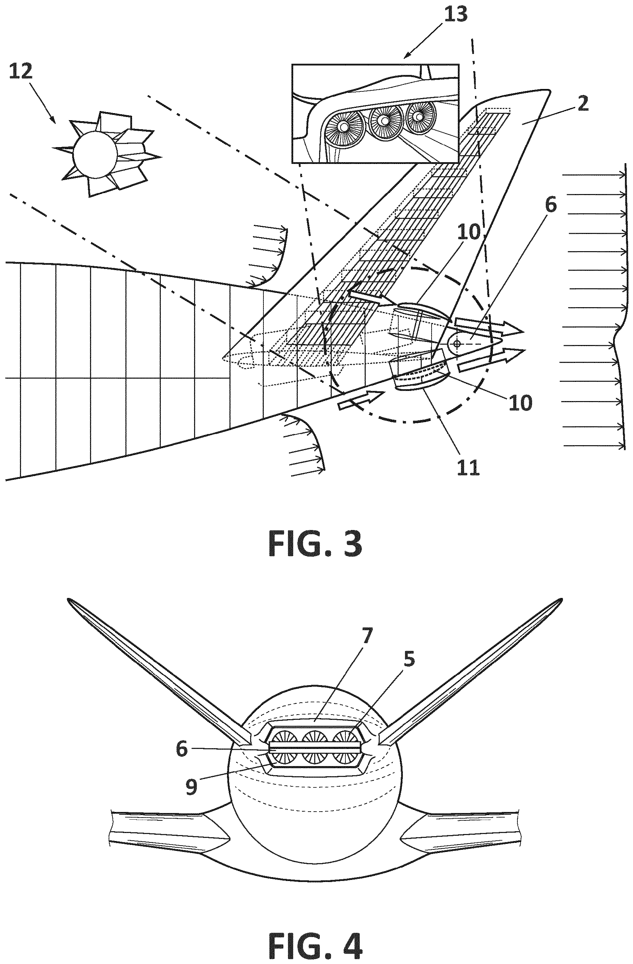

As shown in Figure 3, the thruster assembly casing (7) has a main surface (10) substantially parallel to the aircraft fuselage (4), and the casing (7) further comprises at least one flap (11) movable between two extreme positions, a close position wherein the flap (11) is aligned with the main surface of the casing (10), and an open position wherein the flap (11) is deflected, forming an angle with said main surface (10), to operate as an air-brake.

According to a preferred embodiment, the control surface (6) is rotatably attached to the rearmost section of the rear end to provide a pitching movement to the aircraft. The technical advantage of this vectored thrust is to reduce the size of the empennage.

Finally, as shown in Figures 2-4 and according to another preferred embodiment, the propulsion device (5) comprises an engine driving fluid mechanical devices, such as fans (13) or paddles (12), or electroaerodynamic devices, such as electromagnetic or plasma-dynamic actuators.

## Claims

1. A rear end section (1) for an aircraft, having a fuselage (4), a v-tail configuration (2), and a thruster assembly (3) mounted on the rear end fuselage (4) between the v-tail (2) and the rearmost section of said rear end fuselage (4), wherein the thruster assembly (3) comprises:
- at least one propulsion device (5) installed to ingest and consume air forming a fuselage boundary layer,
- a control surface (6) attached at the rearmost section of the rear end,
- a casing (7) covering at least part of the propulsion device (5) such that an air inlet (8) and an air outlet (9) are defined between the casing (7) and the propulsion device (5), the air inlet (8) being designed for the passage of the fuselage boundary layer towards the propulsion device (5), and the air outlet (9) being designed for directing the airflow exhausted from the propulsion device (5) towards the control surface (6) to divert said airflow and provide vectoring thrust for the aircraft,
wherein the thruster assembly casing (7) has a main surface (10) substantially parallel to the aircraft fuselage (4), and wherein the casing (7) further comprises at least one flap (11) movable between two extreme positions, a close position wherein the flap (11) is aligned with the main surface of the casing (10), and an open position wherein the flap (11) is deflected, forming an angle with said main surface (10), to operate as an air-brake.

2. A rear end section (1) for an aircraft, according to claim 1, wherein the control surface (6) is rotatable attached to the rearmost section of the rear end to provide a pitching movement to the aircraft.

3. A rear end section (1) for an aircraft, according to any preceding claims, wherein the propulsion device (5) comprises an engine driving fluid mechanical devices, such as fans (13) or paddles (12), or electroaerodynamic devices, such as electromagnetic or plasma-dynamic actuators.

## Patentansprüche

1. Heck (1) für ein Flugzeug mit einem Rumpf (4), einer V-Leitwerkkonfiguration (2) und einer Schubdüsenbaugruppe (3), die am heckseitigen Rumpf (4) zwischen dem V-Leitwerk (2) und dem hintersten Abschnitt des heckseitigen Rumpfs (4) montiert ist, wobei die Schubdüsenbaugruppe (3) Folgendes umfasst:
- mindestens eine Antriebsvorrichtung (5), die zur Aufnahme und zum Verbrauch von Luft installiert ist, die eine Rumpfgrenzschicht bildet,
- eine Steuerfläche (6), die an dem hintersten Abschnitt des Hecks angebracht ist,
- ein Gehäuse (7), das mindestens einen Teil der Antriebsvorrichtung (5) abdeckt, so dass zwischen dem Gehäuse (7) und der Antriebsvorrichtung (5) ein Lufteinlass (8) und ein Luftauslass (9) definiert sind, wobei der Lufteinlass (8) für den Durchgang der Rumpfgrenzschicht zu der Antriebsvorrichtung (5) hin ausgelegt ist und der Luftauslass (9) zum Lenken der Abluftströmung aus der Antriebsvorrichtung (5) zu der Steuerfläche (6) hin ausgelegt ist, um die Luftströmung abzulenken und Schubvektorsteuerung für das Flugzeug bereitzustellen,
wobei das Schubdüsenbaugruppengehäuse (7) eine Hauptfläche (10) hat, die im Wesentlichen parallel zu dem Flugzeugrumpf (4) verläuft, und wobei das Gehäuse (7) ferner mindestens eine Klappe (11) umfasst, die zwischen zwei Extrempositionen beweglich ist - einer geschlossenen Position, in der die Klappe (11) mit der Hauptfläche des Gehäuses (10) fluchtet, und einer offenen Position, in der die Klappe (11) abgelenkt ist und einen Winkel mit der Hauptfläche (10) bildet, um als eine Luftbremse zu wirken.

2. Heck (1) für ein Flugzeug nach Anspruch 1, wobei die Steuerfläche (6) drehbar an dem hintersten Abschnitt des Hecks angebracht ist, um eine Nickbewegung des Flugzeugs bereitzustellen.

3. Heck (1) für ein Flugzeug nach einem der vorhergehenden Ansprüche, wobei die Antriebsvorrichtung (5) ein Triebwerk umfasst, das fluidmechanische Vorrichtungen wie Gebläseräder (13) Schaufeln (12) oder elektrodynamische Vorrichtungen wie elektromagnetische oder plasmadynamische Aktuatoren antreibt.

## Revendications

1. Section d'extrémité arrière (1) d'un aéronef, comportant un fuselage (4), une configuration d'empennage papillon (2), et un ensemble propulseur (3) monté sur le fuselage (4) d'extrémité arrière entre l'empennage papillon (2) et la section la plus en arrière du fuselage (4) d'extrémité arrière, l'ensemble propulseur (3) comprenant :
au moins un dispositif de propulsion (5) installé pour ingérer et consommer l'air formant une couche limite de fuselage,
une surface de commande (6) fixée à la section la plus en arrière de l'extrémité arrière,
un carter (7) recouvrant au moins une partie du dispositif de propulsion (5) de sorte qu'une entrée d'air (8) et une sortie d'air (9) soient définies entre le carter (7) et le dispositif de propulsion (5), l'entrée d'air (8) étant conçue pour le passage de la couche limite de fuselage vers le dispositif de propulsion (5), et la sortie d'air (9) étant conçue pour diriger le flux d'air évacué du dispositif de propulsion (5) vers la surface de commande (6) afin de dévier ledit flux d'air et de fournir une poussée vectorielle à l'aéronef,
le carter (7) d'ensemble propulseur présentant une surface principale (10) sensiblement parallèle au fuselage (4) d'aéronef, et le carter (7) comprenant en outre au moins un volet (11) mobile entre deux positions extrêmes, une position fermée dans laquelle le volet (11) est aligné avec la surface principale du carter (10), et une position ouverte dans laquelle le volet (11) est dévié, formant un angle avec ladite surface principale (10), afin de fonctionner comme un aérofrein.

2. Section d'extrémité arrière (1) d'un aéronef, selon la revendication 1, la surface de commande (6) étant fixée de manière rotative à la section la plus en arrière de l'extrémité arrière afin de fournir un mouvement de tangage à l'aéronef.

3. Section d'extrémité arrière (1) d'un aéronef, selon l'une quelconque des revendications précédentes, le dispositif de propulsion (5) comprenant un moteur entraînant des dispositifs mécaniques à fluide, tels que des ventilateurs (13) ou des palettes (12), ou des dispositifs électroaérodynamiques, tels que des actionneurs électromagnétiques ou plasma-dynamiques.
